# DEMANDE DE BREVET EUROPEEN

(11) **EP 4 728 854 A1**
(43) Date de publication de la demande: **22.04.2026**
(21) Numéro de dépôt: 24207659.4
(22) Date de dépôt: 18.10.2024
(51) Int. Cl.: A01G 29/00

(54) **KIT DE PLANTATION ET PROCÉDÉ D'UTILISATION D'UN TEL KIT**

(71) Demandeur: Raincatcher Technologies Trading DMCC, Dubai (AE)
(72) Inventeur: Le Coz, Yann, RAS AL KHAIMAH (AE)
(74) Mandataire: Tranvouez, Edern Morgan

(57) **Abrégé**

L'invention concerne un kit de plantation (1) comprenant : une portion (10) d'une composition hydro-rétentrice ; et un élément d'introduction d'eau (20) conformé pour être en partie enterré dans le sol (5). L'élément d'introduction d'eau (20) comprend un corps (21) logeant au moins une conduite d'eau et présentant : une première partie (23) destinée à être enterrée et comprenant une extrémité de délivrance d'eau (24) ; et une deuxième partie (25) destinée à être aérienne et comprenant une ouverture (26) en communication fluidique avec la conduite d'eau pour permettre d'alimenter en eau la conduite d'eau.

## Description

### Domaine technique

L'invention concerne le domaine de l'agriculture et du traitement des plantes.

L'invention a ainsi plus précisément pour objet un kit de plantation et un procédé d'utilisation d'un tel kit.

### État de l'art antérieur

Afin d'aider le développement de la culture vivrière et/ou de subsistance dans certains pays, tels que certains pays d'Afrique, il est connu de faire des distributions de semences. Néanmoins, ces distributions sont souvent mises à mal en raison du manque d'eau dans ces pays et du réchauffement climatique. Ainsi les petits producteurs à qui ces distributions ont été faites se retrouvent avec des rendements faibles, voire nulles, en raison de la sécheresse.

De ce fait, il y aurait un intérêt à fournir un moyen pour que ces producteurs puissent obtenir des rendements adéquats et puisse ainsi pleinement bénéficier des semences qui leur ont été distribuées.

### Exposé de l'invention

L'invention vise à remédier à l'inconvénient ci-dessus et a ainsi pour but de fournir un moyen pour qu'un producteur puisse optimiser les rendements de ses semences en cas de sécheresse.

L'invention concerne à cet effet un kit de plantation comprenant :
- Une portion d'une composition hydro-rétentrice destinée à être enterrée dans le sol,
- un élément d'introduction d'eau conformé pour être en partie enterré dans le sol, comprenant un corps logeant au moins une conduite d'eau et présentant :
   ∘ une première partie destinée à être enterrée et comprenant une extrémité de délivrance d'eau en communication fluidique avec la conduite d'eau afin de délivrer l'eau se trouvant dans la conduite dans le sol, et
   ∘ une deuxième partie destinée à être aérienne et comprenant une ouverture en communication fluidique avec la conduite pour permettre d'alimenter en eau la conduite d'eau.

Avec une telle portion de composition hydro-rétentrice et un tel élément d'introduction d'eau, l'usager, tel qu'un cultivateur cherchant à développer une agriculture vivrière et/ou de subsistance, est à même, avec un apport d'eau réduit et parfaitement contrôlé au moyen de l'élément d'introduction d'eau, d'obtenir des rendements significativement supérieurs à ceux qu'il obtiendrait sur la base de la seule semence. Ainsi l'utilisation d'un tel kit permet à un tel usager d'obtenir de bon rendement ceci même sur des territoires soumis à des conditions de sécheresse.

De plus, un tel kit peut être utilisé en synergie avec des techniques de micro-irrigations : on peut en effet l'utiliser pour optimiser le rendement en agriculture des générateurs d'eau atmosphérique qui ont des rendements d'eau trop faibles pour l'irrigation d'agriculture. En limitant, voire supprimant l'évaporation grâce à au présent kit, on peut ainsi rendre viable les générateurs d'eau atmosphérique pour certains types de cultures sous des certains types de climats pour lesquels de tels générateur d'eau atmosphérique ne pourraient être envisagés seuls.

Par semence, il est entendu ici et dans le reste du présent document tout matériel végétal utilisé pour la reproduction des plantes, incluant, sans s'y limiter, les graines, les tubercules et les plants. Les graines se réfèrent aux structures reproductrices des plantes à fleurs, capables de germer et de donner naissance à une nouvelle plante. Les tubercules sont des organes de stockage souterrains, tels que les pommes de terre, qui peuvent également servir à la reproduction végétative. Les plants incluent les jeunes pousses ou plantules, souvent cultivées en pépinière, destinées à être transplantées pour la croissance et le développement ultérieurs.

Le kit de plantation peut comprendre en outre au moins une semence.

De cette manière l'usager est à même de directement utiliser le kit de plantation sans avoir à se fournir en semence. On notera également que cette possibilité offre la possibilité d'adapté les éléments du kit, tel que la quantité de la portion de composition et le dimensionnement de l'élément d'introduction d'eau, à la semence que le kit comprend.

La composition hydro-rétentrice peut également fertilisante.

La composition hydro-rétentrice peut comprendre au moins un engrais azoté pur.

La composition hydro-rétentrice peut comprendre un hydrogel comprenant un copolymère de polyacrylate et d'acrylamides de potassium.

Ces possibilités permettent seules ou en combinaison à la plantation de bénéficier d'une croissance rapide, grâce à l'effet fertilisant, tout en bénéficiant pleinement de la rétention d'eau permise par la composition hydro-rétentrice. Cela est d'autant plus significatif que les inventeurs ont identifié qu'un copolymère de polyacrylate et d'acrylamides de potassium présente une absorption d'eau optimale lorsqu'il est combiné avec un engrais azoté pur.

L'élément d'introduction d'eau peut comprendre une indication d'enfoncement correspondant à la profondeur à laquelle doit être placée la composition hydro-rétentrice, ladite indication d'enfoncement séparant la première partie de la deuxième partie.

De cette façon, la plante qui sera issue de la semence sera à même de pleinement bénéficier la portion de composition hydro-rétentrice, l'usager pouvant aisément, grâce à cette indication, placer la composition hydro-rétentrice profondeur optimale pour la semence associée au kit.

Un volume de la conduite d'eau peut être sensiblement égale à la quantité d'eau susceptible d'être retenue par la portion de composition hydro-rétentrice.

Ainsi, lorsque l'usager, lorsqu'il doit arroser la plante, connaît la quantité d'eau qu'il doit introduire dans l'élément d'introduction d'eau pour quelle soit pleinement absorber par la composition hydro-rétentrice.

L'élément d'introduction d'eau peut comprendre au moins un matériau biosourcé.

Le matériau biosourcé peut être biodégradable, ledit matériau biosourcé étant biodégradable dans le sol sur une période de temps supérieure ou égale à 3 mois.

L'invention concerne en outre un procédé d'utilisation d'un kit de plantation selon l'invention, le procédé d'utilisation comprenant les étapes suivantes :
- creusement d'un trou dans le sol,
- placement de la portion de composition hydro-rétentrice dans le trou,
- installation de l'élément d'introduction d'eau dans le trou, l'extrémité de délivrance d'eau étant agencé au niveau de la portion composition hydro-rétentrice,
- rebouchage partielle du trou,
- placement d'une semence,
- rebouchage complet du trou, la première partie de l'élément d'introduction d'eau, la semence et la portion composition hydro-rétentrice étant enterrées et la deuxième partie de l'élément d'introduction d'eau étant aérienne de telle manière à autoriser une alimentation en eau la conduite d'eau.

Un tel procédé permet la mise en oeuvre d'un kit selon l'invention et de bénéficier pleinement des avantages qui y sont liés.

### Brève description des dessins

La présente invention sera mieux comprise à la lecture de la description d'exemples de réalisation, donnés à titre purement indicatif et nullement limitatif, en faisant référence aux dessins annexés sur lesquels :
- la figure 1 illustre une plantation qui a été réalisée à partir d'un kit de plantation selon un premier mode de réalisation de l'invention,
- la figure 2 illustre un kit de plantation selon le premier mode de réalisation de l'invention,
- la figure 3 illustre l'installation d'un élément d'introduction d'eau selon un kit de plantation selon une possibilité de l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

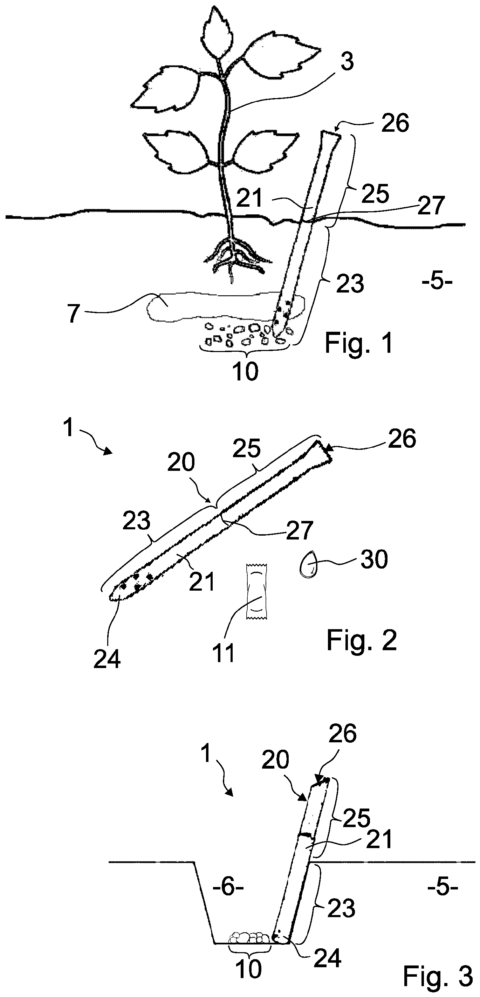

La figure 1 illustre une plante 3 obtenue par l'utilisation d'un kit de plantation 1 selon l'invention notamment montré sur la figure 2.

Comme montré sur la figure 1 et la figure 2, un tel kit de plantation 1 comprend :
- Une portion 10 d'une composition hydro-rétentrice destinée à être enterrée dans le sol 5, cette portion 10 étant illustrée sur la figure 2 sous la forme d'un sachet 11 la comprenant,
- un élément d'introduction d'eau 20 conformé pour être en partie enterré dans le sol 5, comprenant un corps 21 logeant au moins une conduite d'eau, non figurée, et présentant :
   ∘ une première partie 23 destinée à être enterrée et comprenant une extrémité de délivrance d'eau 24 en communication fluidique avec la conduite d'eau afin de délivrer l'eau se trouvant dans la conduite d'eau dans le sol, et
   ∘ une deuxième partie 25 destinée à être aérienne et comprenant une ouverture 26 en communication fluidique avec la conduite d'eau pour permettre d'alimenter en eau la conduite d'eau.

Selon une possibilité de l'invention illustré sur la figure 2, le kit de plantation 1 peut également comprendre une semence 30.

Selon cette possibilité, la portion 10 de composition hydro-rétentrice et l'élément d'introduction d'eau peuvent être spécifiquement adaptés à ladite semence. Une telle adaptation pouvant par exemple correspondre à une quantité de la composition hydro-rétentrice, une composition de la composition hydro-rétentrice, un dimensionnement de l'élément d'introduction d'eau 20. Selon une autre possibilité, dans laquelle le kit comprend ou non une semence 30, les constituants du kit de plantation, c'est-à-dire la portion 10 de composition et l'élément d'introduction d'eau 20, peuvent être génériques et conformés pour différents types de semences.

La composition hydro-rétentrice peut comprendre un hydrogel comprenant un copolymère de polyacrylate et d'acrylamides de potassium.

Afin de favoriser la pousse de la semence, la composition hydro-rétentrice peut également être fertilisante. Pour se faire elle peut comprendre un engrais azoté pur. L'engrais azoté est avantageusement sélectionné dans le groupe comprenant l'urée, le sulfate d'ammonium, Nitrate d'ammonium, Nitrate de sodium, Ammoniac anhydre, Nitrate d'urée, Urée formaldéhyde, Ammoniac liquide (solution d'ammoniac dans l'eau), Anhydride ammoniacal, ou un mélange de ceux-ci.

La composition hydro-rétentrice peut comprendre entre 60 et 95%, de préférence entre 70 et 95%, plus préférentiellement entre 80 et 95% en poids de l'hydrogel comprenant un copolymère de polyacrylate et d'acrylamides de potassium ; et entre 5 et 40%, de préférence entre 5 et 20%, plus préférentiellement entre 5 et 10% en poids de l'engrais azoté pur.

Selon une possibilité de l'invention, la composition hydro-rétentrice peut également comprendre moins de 1% en poids d'engrais phosphatés et/ou d'engrais potassiques, de préférence ne comprend pas d'engrais phosphatés et/ou d'engrais potassiques.

Les inventeurs ont découvert de manière surprenante la compatibilité exclusive de cet hydrogel avec les engrais azotés purs. Les résultats ont montré que cette combinaison spécifique permet une synergie qui favorise une absorption optimale de l'azote par les plantes, réduisant ainsi le gaspillage d'engrais et les impacts environnementaux associés (voir exemples). Ainsi, la composition de la composition hydro-rétentrice explicité ci-dessus est particulièrement intéressante dans le contexte du kit de plantation selon l'invention.

On notera que la composition hydro-rétentrice peut présenter l'hydrogel et/ou l'engrais azoté sous forme de granulés, facilitant ainsi son application dans le sol et la fourniture sous forme emballée. Les granulés peuvent être dimensionnés entre 0,5 et 5 mm, de préférence entre 0,5 et 3 mm, plus préférentiellement entre 0,8 et 2 mm pour assurer une distribution homogène dans le sol et une absorption efficace par les racines des plantes.

En fonction du type de semence et du terrain auquel est destiné le kit de plantation, la portion 10 de composition hydro-rétentrice peut être comprise entre 0,5 et 15 grammes, voire entre 1 et 5 grammes ou encore entre 2 et 3 grammes.

D'une manière avantageuse, la portion de composition hydro-rétentrice fourni logé dans un emballage, tel qu'un sachet, avantageusement papier. Selon cette possibilité, l'emballage peut être avantageusement biodégradable et de préférence hydrosoluble, afin de pouvoir se dégrader lors du premier arrosage. De cette manière, la portion de composition hydro-rétentrice est à même d'être placée dans la terre sans avoir à être préalablement extraite de son emballage. L'utilisation du kit selon l'invention peut ainsi être facilitée pour l'usager.

Comme montré sur la figure 2, l'élément d'introduction d'eau 20 peut présenter un corps 21 sensiblement tubulaire délimitant en son centre la conduite d'eau. Le corps s'étend longitudinalement et comprend la première partie 23 destinée à être enterrée et la deuxième partie 25 destinée à être aérienne, c'est-à-dire maintenue hors du sol.

Selon une configuration envisagée, le corps présente une forme générale tubulaire longitudinale cylindrique de révolution. La longueur du corps peut être comprise entre 5 et 40 cm, voire entre 10 et 30 cm. Un diamètre moyen du corps peut être compris entre 2 cm à 5 cm, voire entre 3 cm et 4 cm.

De manière avantageuse et comme montré sur la figure 2, l'élément d'introduction d'eau 20 comprend une indication d'enfoncement 27 correspondant à la profondeur à laquelle doit être placée la composition hydro-rétentrice, ladite indication d'enfoncement séparant la première partie 23 de la deuxième partie 25. De cette manière, l'usager, lorsqu'il souhaite mettre en oeuvre le kit de plantation 1 selon l'invention, est à même de savoir à quelle profondeur placée la portion 10 de composition pour que la semence en bénéficie pleinement. Une telle indication peut comprendre un marquage visuel, tel qu'un trait dessiné sur la surface extérieure de l'élément d'introduction d'eau 20, et/ou marquage physique, tel qu'une nervure ou une rainure aménagée sur la surface extérieure de l'élément d'introduction d'eau 20. On notera que lorsque le kit de plantation lest à même d'être utilisé avec plusieurs types de semences, l'élément d'introduction d'eau 20 peut comprendre plusieurs indications correspondant chacune à un type de semences respectif

Selon une possibilité de l'invention, le volume de la conduite d'eau peut être sensiblement égale à la quantité d'eau susceptible d'être retenue par la portion 10 de composition hydro-rétentrice. De cette manière, l'usager est à même de savoir quelle quantité d'eau il doit introduire pour que la plante à croître puisse pleinement bénéficier de la composition hydro-rétentrice. On notera à titre d'exemple, que le volume de la conduite d'eau peut être compris entre 50 ml et 1L, voire entre 100 ml et 500 ml, ou encore entre 150 ml et 300 ml.

La première partie comprend l'extrémité de délivrance d'eau 24 en communication fluidique avec la conduite d'eau afin de délivrer l'eau se trouvant dans la conduite d'eau dans le sol 5. L'extrémité de délivrance d'eau 24 correspond à l'extrémité du corps 21 comprise dans la première partie. Afin de permettre une telle délivrance d'eau, l'extrémité de délivrance peut comprendre une ou plusieurs ouvertures, en communication fluidique avec la conduite d'eau au travers desquelles l'eau est susceptible de se déversée dans le sol 5 et dans la portion de composition hydro-rétentrice. En variante, l'extrémité de délivrance d'eau 24 peut comprendre une zone du corps poreuse dans laquelle débouche la conduite d'eau afin que l'eau puisse être transmis par capillarité dans le sol 5 et dans la portion 10 de composition hydro-rétentrice. Une telle zone poreuse permet une délivrance de l'eau se trouvant dans la conduite de manière graduelle assurant ainsi une bonne absorption, et donc rétention, de l'eau par la portion 10 de composition hydro-rétentrice.

La deuxième partie 25 du corps 21 est une partie aérienne du corps 21 qui comprend une ouverture 26 en communication fluidique avec la conduite d'eau pour permettre d'alimenter en eau la conduite d'eau. L'ouverture 26 est préférentiellement agencée au niveau de l'extrémité du corps comprise dans la deuxième partie 25. Comme montré sur la figure 2, afin de favoriser le remplissage de la conduite d'eau, l'extrémité du corps comprise dans la deuxième partie 25 peut présenter une forme en entonnoir, la partie évasée de l'entonnoir formant l'ouverture 26.

Selon une première possibilité de l'invention, l'élément d'introduction d'eau 20 peut être formé dans un matériau persistant, tel qu'un polymère thermoplastique ou thermodurcissable. De cette manière, l'usager peut conserver sont éléments d'introduction d'eau 20 pour une autre plantation et n'a qu'à se procurer une portion 10 de composition hydro-rétentrice. Selon cette possibilité, afin de limiter l'empreinte carbone du présent kit de plantation 1, l'élément d'introduction d'eau 20 peut comprendre un matériau biosourcé, tel qu'un polymère thermoplastique ou thermodurcissable au moins en partie issu de la biomasse.

Selon une deuxième possibilité, afin de s'assurer que l'usager soit conscient de la nécessité de renouvelé la portion 10 de composition hydro-rétentrice, l'élément d'introduction d'eau 20 peut être réalisé dans un matériau biodégradable, tel que du bois ou un polymère thermoplastique ou thermodurcissable adapté pour se dégrader après un certain temps. Ainsi, selon un exemple de cette deuxième possibilité notamment illustré sur la figure 3, l'élément d'introduction d'eau 20 peut être formé par un morceau de bambou dont les deux extrémités sont ouvertes. Dans le cadre de cette deuxième possibilité de l'invention, l'élément d'introduction d'eau 20 peut être adapté pour se dégrader sur un lapse de temps sensiblement identique a celui de la composition hydro-rétentrice. Ainsi, dans ce cadre le matériau de l'élément d'introduction d'eau 20 peut être biodégradable dans le sol 5 sur une période de temps supérieure ou égale à 3 mois.

Un tel kit de plantation 1 peut être utilisé dans le cadre d'un procédé de plantation comprenant les étapes suivantes :
- creusement d'un trou 6 dans le sol 5,
- placement de la portion 10 de composition hydro-rétentrice dans le trou 6,
- installation de l'élément d'introduction d'eau 20 dans le trou 6, l'extrémité de délivrance d'eau 24 étant agencé au niveau de la portion 10 composition hydro-rétentrice,
- rebouchage partielle du trou 6,
- placement d'une semence 30,
- rebouchage complet du trou 6, la première partie 23 de l'élément d'introduction d'eau 20, la semence 30 et la portion 10 de composition hydro-rétentrice étant enterrées et la deuxième partie 25 de l'élément d'introduction d'eau 20 étant aérienne de telle manière à autoriser une alimentation en eau de la conduite d'eau.

Lors du rebouchage partiel du trou 6, il peut être utilisé, comme illustré sur la figure 1, du compost 7 afin de favoriser la fertilisation de la plante 3 à croitre.

On notera que dans une configuration usuelle, la portion 10 de composition hydro-rétentrice peut être placée entre 2 et 20 cm sous la semence, voire entre 2,5 et 15 cm, voire entre 5 et 12 cm.

Exemple de réalisation de l'invention :
Afin d'illustré l'avantage apporté par le kit de plantation selon l'invention, les inventeurs ont réalisé des tests comparatifs concernant les rendements obtenus dans le cadre de semi avec et sans kit de plantation selon l'invention. Ces tests ont été réalisés dans le cadre de plantation de plants de tomates et de concombres.

Les tests réalisés sans le kit de plantation ont démontré qu'un plant de tomate ayant reçu 100% de ses besoins en irrigation nécessaire permet de récolter 2,67kg. Avec un apport en eau correspondant à 50% de ses besoins, le rendement est réduit de 37% (soit 1,68 kg).

Avec l'utilisation d'un kit de plantation selon l'invention, un plant de tomate ne recevant que 50% de ses besoins en irrigation présente, en raison de la fertilisation permise par composition selon l'invention, un rendement supérieur à un plant de tomate ayant reçu 100% de ses besoins d'irrigation. En effet, en raison de cet apport d'eau directement au niveau de la composition hydro-rétentrice permis par l'élément d'introduction d'eau, l'évaporation d'eau est fortement réduite et la plante a directement accès à l'eau stocké. Il en résulte une efficacité dans l'irrigation en eau réduisant ainsi les besoins en arrosage de la plante.

Les plants de concombres ont permis d'obtenir des résultats similaires à ceux observés avec les plants de tomates, les plants de concombres montrant un besoin en eau réduit de 50% tout en offrant des rendements supérieurs à ceux obtenus en l'absence de kit de plantation 1 selon l'invention.

On notera de plus que ces mêmes tests ont permis de démontrer que les tomates et concombres produits avec le kit de plantation 1 selon l'invention présente aucune toxicité liée à l'utilisation de la composition hydro-fertilisante ceci aussi bien en association avec les métaux lourds ou les acrylamides.

Ainsi, ces tests ont montré que le kit selon l'invention permet de réduire de moitié les besoins en eau des plantes ceci avec des rendements supérieurs à ceux obtenus même avec une irrigation adéquate.

## Revendications

1. Kit de plantation (1) comprenant :
- Une portion (10) d'une composition hydro-rétentrice destinée à être enterrée dans le sol (5),
- un élément d'introduction d'eau (20) conformé pour être en partie enterré dans le sol (5), comprenant un corps (21) logeant au moins une conduite d'eau et présentant :
∘ une première partie (23) destinée à être enterrée et comprenant une extrémité de délivrance d'eau (24) en communication fluidique avec la conduite d'eau afin de délivrer l'eau se trouvant dans la conduite dans le sol (5), et
∘ une deuxième partie (25) destinée à être aérienne et comprenant une ouverture (26) en communication fluidique avec la conduite d'eau pour permettre d'alimenter en eau la conduite d'eau.

2. Kit de plantation (1) selon la revendication 1 comprenant en outre au moins une semence (30).

3. Kit de plantation (1) selon la revendication 1 ou 2, dans lequel la composition hydro-rétentrice est également fertilisante.

4. Kit de plantation (1) selon la revendication 3, dans lequel la composition hydro-rétentrice comprend au moins un engrais azoté pur.

5. Kit de plantation (1) selon la revendication 1 à 4, dans lequel la composition hydro-rétentrice comprend un hydrogel comprenant un copolymère de polyacrylate et d'acrylamides de potassium.

6. Kit de plantation (1) selon l'une quelconque des revendications 1 à 5, dans lequel l'élément d'introduction d'eau (20) comprend une indication d'enfoncement (27) correspondant à la profondeur à laquelle doit être placée la composition hydro-rétentrice, ladite indication d'enfoncement séparant la première partie (23) de la deuxième partie (25).

7. Kit de plantation (1) selon l'une quelconque des revendications 1 à 6, dans lequel un volume de la conduite d'eau est sensiblement égale à la quantité d'eau susceptible d'être retenue par la portion (10) de composition hydro-rétentrice.

8. Kit de plantation (1) selon l'une quelconque des revendications 1 à 7, dans lequel l'élément d'introduction d'eau (20) comprend au moins un matériau biosourcé.

9. Kit de plantation (1) selon la revendication 8, dans lequel le matériau biosourcé est biodégradable, ledit matériau biosourcé étant avantageusement biodégradable dans le sol (5) sur une période de temps supérieure ou égale à 3 mois.

10. Procédé d'utilisation d'un kit de plantation (1) selon l'une quelconque des revendications 1 à 9, le procédé d'utilisation comprenant les étapes suivantes :
- creusement d'un trou (6) dans le sol (5),
- placement de la portion (10) de composition hydro-rétentrice dans le trou (6),
- installation de l'élément d'introduction d'eau (20) dans le trou (6), l'extrémité de délivrance d'eau (24) étant agencé au niveau de la portion (10) composition hydro-rétentrice,
- rebouchage partielle du trou (6),
- placement d'une semence (30),
- rebouchage complet du trou (6), la première partie (23) de l'élément d'introduction d'eau (20), la semence (30) et la portion (10) composition hydro-rétentrice étant enterrées et la deuxième partie (25) de l'élément d'introduction d'eau (20) étant aérienne de telle manière à autoriser une alimentation en eau la conduite d'eau.
